# EUROPEAN PATENT APPLICATION

(11) **EP 1 239 160 A2**
(43) Date of publication of application: **11.09.2002**
(21) Application number: 02077412.1
(22) Date of filing: 18.12.1997
(51) Int. Cl.: F04C 18/16, F04C 29/02

(54) **Screw machine and shaft bearing lubrication**

(30) Priority: 23.12.1996 BE 9601077
(62) Divisional of application: 97204001.8
(71) Applicant: ATLAS COPCO AIRPOWER N.V., 2610 Wilrijk (BE)
(72) Inventor: De Boek, Richard Andrè Maria, 9170 Sint-Gillis-Waas (BE)
(74) Representative: Donné, Eddy

(57) **Abstract**

The invention relates to a machine with bearing-mounted rotors with shafts (5 and 5A, 14 and 14A) at their ends, whereby on at least one end of the housing (1), the shaft (5, 14) of each of the rotors (2 and 3) rests in a pair of bearings (8-9, 17-18) and whereby the bearings (8 and 9) of the one pair are situated opposite the bearings (17 and 18) of the other pair. The stationary outer ring (40) and the rotating inner ring (41) of one of the bearings (12, 21) of each pair (11-12 and 20-21) extend on the side of the other bearing (11, 20) outside the bearing elements (42) which they hold and in the protruding part of the stationary outer ring (40) of the first-mentioned bearing (12, 21) of each pair are provided at least two openings (43), whereby in or opposite one opening (43) is situated a nozzle (32 or 32A) of the spray element (27A).

## Description

The present invention concerns a machine of the type consisting of a housing and two co-operating rotors erected therein which are bearing-mounted with shafts at their ends, whereby on at least one end of the housing, the shaft of each of the rotors rests in a pair of bearings and whereby the bearings of one pair are situated opposite the bearings of the other pair, and whereby at least one spray element for spraying lubricating liquid on said bearings is erected between the bearings of the pairs.

Such machines are for example compressors, tube expanders and pumps.

Especially with dry compressors whereby no lubricating liquid such as oil or water is injected on the rotors, the bearings are usually lubricated by continuously spraying oil on the bearings.

In such known compressors, the spray element contains two tubes directed diagonally on the shafts which reach between the bearings of one pair, the other pair respectively, and which are provided at their ends with nozzles directed sideways on the bearings of the pair.
As a result, the construction of this spray element is complicated and the oil distribution is not always ideal.

The present invention aims a machine with bearing-mounted rotors which does not show these and other disadvantages and whereby an effective lubrication of the bearings can be obtained with a simple spray element.

This aim is reached according to the invention in that the rings of one of the bearings of each pair extend on the side of the other bearing outside the bearing elements which they hold and in that, in the protruding part of the stationary outer ring of the first mentioned bearing of each pair are provided with at least two openings, whereby in or opposite one opening is situated a nozzle of the spray element.

This spray element may contain two tubes, one of which sticks in an opening in an outer ring of a bearing of one pair, and the other of which sticks in an opening in the outer ring of a bearing of the other pair.

The above-mentioned bearing with protruding parts of the rings is preferably a ball bearing and the protruding part of the rotating inner ring of this bearing preferably has a smaller thickness than the part of this inner ring situated on the other side in relation to the balls.

In order to better explain the characteristics of the invention, the following preferred embodiment of a machine with bearing-mounted rotors and liquid lubrication of the bearings according to the invention is described, as an example only without being limitative in any way, with reference to the accompanying drawings, in which:
Figure 1 shows a section of a machine according to the invention made as a compressor;
figure 2 shows the part indicated with F2 in figure 1 to a larger scale;
figure 3 shows a section analogous to that of figure 2, but parallel to and at a distance from the latter and with partial cut-outs;
figure 4 shows a section according to line IV-IV in figure 3;
figure 5 shows the part which is indicated in figure 1 with F5 to a larger scale.

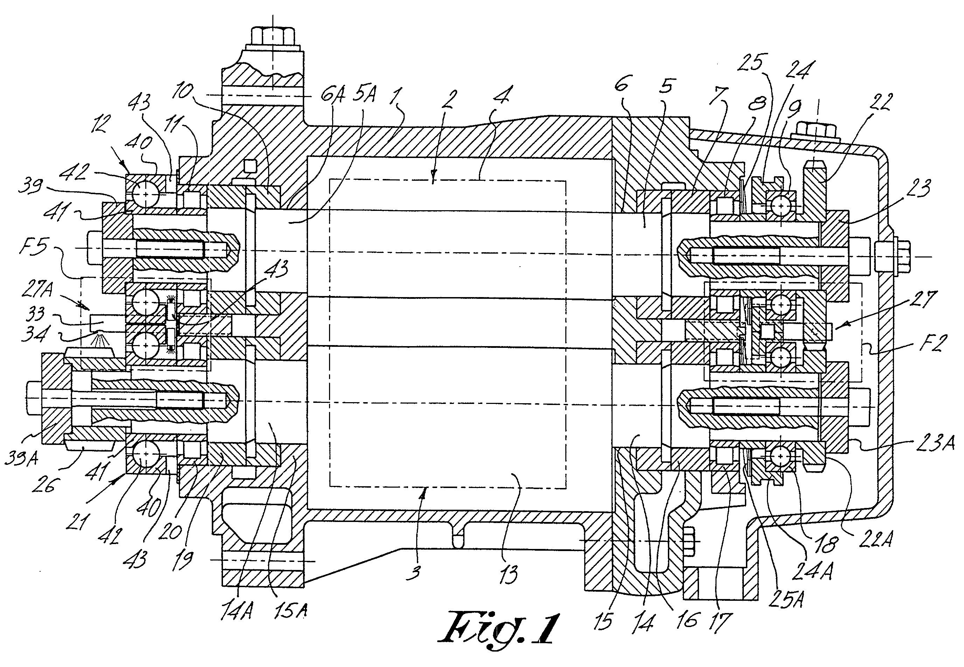

Figure 1 shows a screw type compressor of the dry type, i.e. without any injection of lubricating liquid, which mainly contains a housing 1 and two co-operating rotors which are bearing-mounted therein, namely a female rotor 2 and a male rotor 3.

The housing 1 is provided with an air inlet which is not represented in the figures and an outlet for compressed air.

The female rotor 2 has a helical body 4 which is provided on both ends of a shaft 5, 5A respectively, which is situated in a shaft opening 6, 6A respectively, in the housing 1.

The shaft 5 is surrounded at one end, in the shaft opening 6, by a shaft seal 7 and, on the outside of this seal, it is bearing-mounted in a pair of bearings, namely in a radial bearing 8, for example a roller bearing, which is provided in the housing 1, and in an axial bearing 9, for example a ball bearing, which surrounds the shaft 5 outside the shaft opening 6.

In an analogous manner, the shaft 5A is surrounded at the other end of the rotor 2 by a shaft seal 10 and it is bearing-mounted in a pair of bearings, namely a radial bearing 11, for example a roller bearing, which is situated inside the housing 1, and an axial bearing 12, for example a ball bearing, which surrounds the shaft 5A.

The male rotor 3 has a body 13 which is complementary to the body 4 and which is provided on both ends with a shaft 14, 14A respectively, which is situated in a shaft opening 15, 15A respectively, in the housing 1.

The shafts 14 and 14A are bearing-mounted in the same manner as the shafts 5 and 5A.

The shaft 14 is surrounded at one end, in the shaft opening 15, by a shaft seal 16 which is similar to the shaft seal 7, bearing-mounted in a radial bearing 17 and in an axial bearing 18.

These bearings 17 and 18 of the shaft 14 are situated right opposite the bearing 8, the bearing 9 respectively, of the shaft 5.

The other shaft 14A is surrounded by a shaft seal 19 and is bearing-mounted in a radial bearing 20, for example a roller bearing, and an axial bearing 21, for example a ball bearing. These bearings 20 and 21 are situated exactly opposite the bearing 11, the bearing 12 respectively, of the shaft 5A.

On the shafts 5 and 14, on one end of the rotors 2 and 3, are fixed synchronisation gears 22 and 22A which work in conjunction with one another, such that the rotor 3 drives the rotor 2 synchronously.

These gear wheels 22 and 22A are held against the axial bearings 9, 18 respectively, by end parts 23 and 23A screwed on the shafts 5 and 14. These bearings 9 and 18 are held against a part of the housing 1 and the radial bearings 8, 17 respectively, countersunk therein, by means of a ring 24, 24A respectively, and a corrugated spring 25, 25A respectively.

The male rotor 3 is driven by a motor via a gear wheel 26 on the shaft 14A which is part of a gear wheel transmission which is not represented in the figures.

The radial bearings 8, 11, 17 and 20 and the axial bearings 9, 12, 18 and 21 are lubricated with lubricating liquid, for example oil.

To this end, the compressor contains a spray element 27 at one end between the pair of bearings 8 and 9 on the shaft 5 and the pair of bearings 17 and 18 on the shaft 14 which is connected via a duct 28 through the housing 1 to a source of lubricating liquid under pressure which is not represented in the figures.

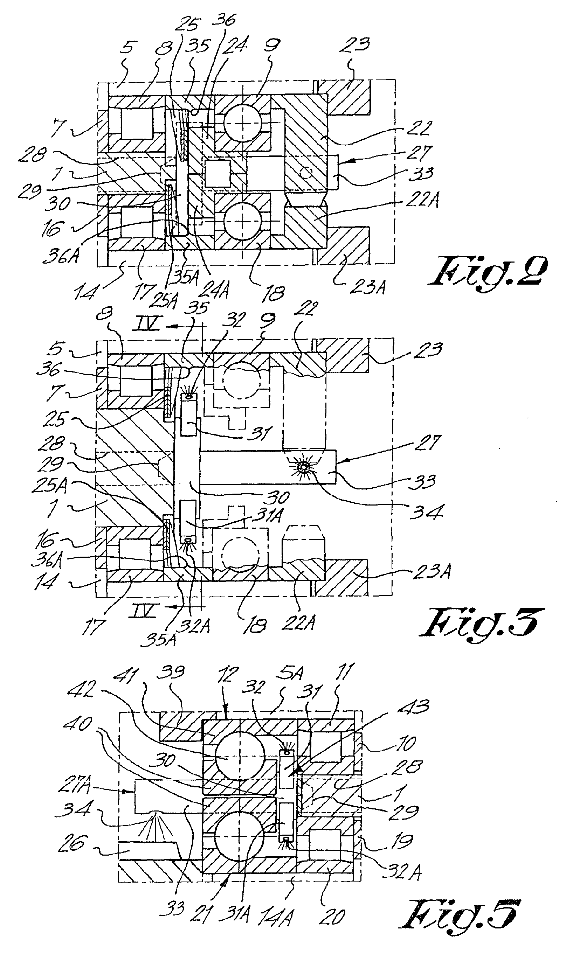

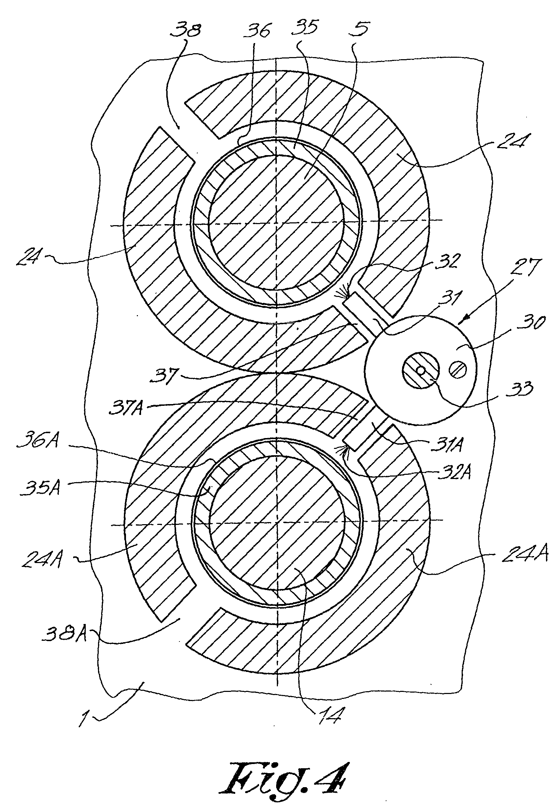

As is represented in the figures 2 to 4, the spray element 27 consists of an axial tube 29 which fits in the duct 28, a fixing part 30 with which the spray element 27 is fixed against a part of the housing 1, two sideward directed tubes 31 and 31A connected thereto which are each provided with a nozzle 32, 32A respectively, at their end and which are connected to the inside of the tube 29, and an axial tube 33 which forms the prolongation of the tube 29 and which is provided near its end with a sideward directed nozzle 34.

The spray element 27 is directed with its two tubes 31 and 31A respectively between the two bearings 8 and 9 and between the two bearings 17 and 18, in particular onto a ring 35 which surrounds the shaft 5 between the bearings 8 and 9, onto a ring 35A respectively which surrounds the shaft 14 between the bearings 17 and 18.

These rings 35 and 35A are provided on their entire outer perimeter with a tooth 36, 36A respectively, which has an almost triangular section with two sloping sides, running into one point at the top.

The above-mentioned corrugated spring 25 and a part of the above-mentioned ring 24 surround the ring 35 around the shaft 5, whereas the corrugated spring 25A and a part of the ring 24A are situated around the ring 35A.

Also, the tubes 31 and 31A partly stick in openings 37 and 37A which extend radially through the ring 24, 24A respectively. Diametrically opposite the opening 37 or 37A a second opening 38 or 38A is provided in the ring 24 or 24A for discharging the lubricating oil.

Lubricating liquid which is sprayed through the nozzle 32 is directed to the bearings 8 and 9 by the tooth 36 of the ring 35, which turns along with the shaft 5, while lubricating liquid which is sprayed through the nozzle 32A by the tooth 36A of the ring 35A, which turns along with the shaft 14, is directed towards the bearings 17 and 18. As a result, these bearings 8, 9, 17 and 18 are efficiently lubricated.

Through the nozzle 34, lubricating oil is sprayed on the synchronisation gear wheel 22 in order to lubricate the synchronisation gear wheels 22 and 22A.

At the other end of the compressor, the bearings 11 and 12 are situated against one another and are pushed against one another by an end part 39 screwed on the shaft 5A. The stationary outer ring 40 of the bearing 12 pushes against a part of the housing 1.

Both the stationary outer ring 40 and the rotating inner ring 41 of the axial bearing 12, which is formed of a ball bearing, are extended on the side of the radial bearing 11 and are thus longer than in a normal ball bearing, so that they significantly protrude outside the bearing elements, namely the balls 42.

The protruding ring parts have a constant thickness, but the thickness of this part on the inner ring 41 is smaller than the thickness of the inner ring 41 on the other side of the balls 42, as is represented in detail in figure 5.

In the protruding part of the stationary outer ring 40 are provided radial openings 43.

The bearings 20 and 21 of the shaft 14A are designed and mounted in the same manner as the bearings 11 and 12. They are pushed against one another by an end part 39 which is screwed on the shaft 14A and with the help of the gear wheel 26, whereby the stationary outer ring 40 of the bearing 21 pushes against a part of the housing 1.

The bearings 11, 12, 20 and 21 are lubricated with oil which is sprayed through a spray element 27A which is identical to the above-mentioned spray element 27, and corresponding parts are indicated with the same figure of reference.

The tube 31 of this spray element 27A sticks in one of the radial openings 43 in the outer ring 40 of the axial bearing 12, whereas the tube 31A of this spray element 27A sticks in one of the radial openings 43 in the stationary outer ring 40 of the bearing 21, such that oil is sprayed on the inner rings 41 and thus on the bearings 11 and 12, 20 and 21 respectively, via the nozzles 32 and 32A.

Thus a good lubrication of these bearings 11, 12, 20 and 21 is obtained.

Thanks to the integrated ducts 28 in the housing 1 and the spray elements 27 and 27A can be obtained a very well controlled oil distribution.

The present invention is by no means limited to the above-described embodiments represented in the accompanying drawings; on the contrary, such machines can be made in all sorts of variants while still remaining within the scope of the invention.

## Claims

1. Machine with bearing-mounted rotors consisting of a housing (1) and two co-operating rotors (2 and 3) erected therein, which are supported on bearings (8-9 and 11-12, 17-18 and 20-21 respectively) with shafts (5 and 5A, 14 and 14A respectively) at their ends, whereby on at least one end of the housing (1), the shaft (5A, 14A respectively) of each of the rotors (2 and 3) rests in a pair of bearings (11-12, 20-21 respectively) and whereby the bearings (11 and 12) of the one pair (11-12) are situated opposite the bearings (20 and 21) of the other pair (20-21), and at least one spray element (27A) which is erected between the pairs (11-12 and 20-21) for spraying lubricating liquid on said bearings (11-12-20-21), **characterised in that** the stationary outer ring (40) and the rotating inner ring (41) of one of the bearings (12, 21 respectively) of each pair (11-12 and 20-21) extend on the side of the other bearing (11, 20 respectively) outside the bearing elements (42) which they hold and **in that**, in the protruding part of the stationary outer ring (40) of the first-mentioned bearing (12, 21 respectively) of each pair are provided at least two openings (43), whereby in or opposite one opening (43) is situated a nozzle (32 or 32A) of the spray element (27A).

2. Machine according to claim 1, **characterised in that** this spray element (27A) contains two tubes (31 and 31A) of which one tube (31) sticks in an opening (43) in an outer ring (40) of a bearing (12) of one pair (11-12) and the other tube (31A) sticks in an opening (43) in the outer ring (40) of a bearing (21) of the other pair (20-21) .

3. Machine according to claim 1 or 2, **characterised in that** the bearing (12, 21 respectively) with the protruding parts of the rings (40-41) is a ball bearing.

4. Machine according to claim 3, **characterised in that** the protruding part of the rotating inner ring (41) of this bearing (12, 21 respectively) has a smaller thickness than the thickness of this inner ring (41) on the other side of the balls (42).

5. Machine according to any of claims 1 to 4, **characterised in that** the bearing (12, 21 respectively) of each pair (11-12 and 20-21) reaches practically up to the other bearing (11, 20 respectively) of the pair with the protruding parts of its rings (40 and 41).

6. Machine according to any of the preceding claims, **characterised in that** it is a compressor.
